# EUROPÄISCHE PATENTSCHRIFT

(11) **EP 1 317 496 B1**
(45) Veröffentlichungstag und Bekanntmachung des Hinweises auf die Patenterteilung: **24.08.2005**
(21) Anmeldenummer: 01971948.3
(22) Anmeldetag: 22.08.2001
(51) Int. Cl.: C08G 18/40, C08G 18/62, C08G 18/70, C09D 175/04

(54) **WÄSSRIGE 2-K-PUR-SYSTEME**
AQUEOUS 2K PUR SYSTEMS
SYSTEMES PUR 2K AQUEUX

(30) Priorität: 04.09.2000 DE 10043433
(43) Veröffentlichungstag der Anmeldung: 11.06.2003
(73) Patentinhaber: Bayer MaterialScience AG, 51368 Leverkusen (DE)
(72) Erfinder: PROBST, Joachim, 51145 Köln (DE); LÜHMANN, Erhard, 29699 Bomlitz (DE); CLEMENS, Horst, 47802 Krefeld (DE); KREMER, Wolfgang, 47647 Kerken (DE); MEIXNER, Jürgen, 47803 Krefeld (DE); LAAS, Hans-Josef, 51467 Bergisch Gladbach (DE)
(86) Internationale Anmeldenummer: PCT/EP2001/009679
(87) Internationale Veröffentlichungsnummer: WO 2002/020638

(56) Entgegenhaltungen:
- EP-A- 0 358 979
- EP-A- 0 496 210
- WO-A-00/39228
- DE-A- 4 421 823

## Beschreibung

Die Erfindung betrifft wässrige 2K-PUR-Systeme aus speziell modifizierten Vinylpolymerpolyoldispersionen und Polyisocyanaten, ein Verfahren zur Herstellung solcher wässriger 2 K-PUR-Systeme mit verbesserter Stabilität gegen wässrige Chemikalien und deren Verwendung als 2K-PUR-Lacke bei der Lackierung von beliebigen Substraten wie z.B. Holz, Metall, Kunststoff.

In der EP-A 0 358 979, der EP-A 0 496 210 und der EP-A 0 557 844 und anderer Patentliteratur wird die Herstellung von wässrigen 2 K-PUR-Dispersionen beschrieben, bei denen sowohl sogenannte Sekundärdispersionen als auch sogenannte Primärdispersionen als Polyolkomponenten zum Einsatz mit geeigneten Polyisocyanaten kommen. Unter dem Begriff "Sekundärdispersionen" werden solche wässrigen Dispersionen verstanden, die zunächst im homogenen organischen Medium polymerisiert werden und danach unter Neutralisation im allgemeinen ohne Zusatz externer Emulgatoren im wässrigen Medium umdispergiert werden.

Unter dem Begriff "Primärdispersionen" werden Polyoldispersionen verstanden, die direkt in wässriger Phase nach dem Verfahren der Emulsionspolymerisation hergestellt werden. Sie enthalten im Allgemeinen externe Emulgatoren; diese bewirken eine elektrostatische oder eine sterische Stabilisierung.

Die Sekundärdispersionen sind aufgrund ihrer relativ niedrigen Molgewichte Mₙ meist unter 5000 g/mol und M_{w} meist unter 30000 g/mol und aufgrund ihres ausgewogenen hydrophil / lipophilen Charakters hervorragend geeignet, neben hydrophilierten auch hydrophobe, nicht selbstdispergierende Polyisocyanate im wässrigen Milieu stabil zu emulgieren und gleichzeitig als Reaktivkomponente zu fungieren (vgl. EP-A 0 358 979). Aufgrund der relativ niedrigen Molgewichte der Polyol-Sekundärdispersionen sind solche wässrigen 2 K-PUR-Systeme bezüglich ihrer physikalischen Antrocknung auf Holz als Substrat jedoch meist nur unzureichend geeignet. Die Trocknungszeiten (Hand- und Staubtrocknung) sind zu lang und für die industrielle Lackierung ungeeignet.

Besser geeignet als physikalisch schnell trocknende wässrige 2 K-PUR-Systeme sind im Allgemeinen solche, die Primärdispersionen als Polyolkomponenten enthalten. Diese weisen im allgemeinen Molgewichtswerte von Mₙ deutlich über 5000 g/mol und M_{w}-Werte von meist über 30000 g/mol auf. Diese Primärdispersionen lassen sich im allgemeinen nur mit (teil)hydrophilierten Polyisocyanaten kombinieren; hiermit ist eine relativ unkomplizierte Dispergierung mit einfacheren Rühraggregaten bzw. per Hand und Glasstab möglich (vgl. EP-A 0 557 844). Werden nun z.B. nichtionisch mit Polyethergruppen hydrophilierte Polyisocyanate als Vernetzer eingesetzt und trägt man solche Beschichtungen beispielsweise auf Holz als Substrat auf, dann erhält man nach deren Trocknung Lackschichten, die nach Einwirken von färbenden Substanzen wie z.B. Rotwein, Kaffee, Tee, Senf u. a. bleibende Verfärbungen zurückbehalten, die insbesondere auf Möbelstücken zur permanenten Fleckenbildung führen können. Außerdem zeigen solche Beschichtungssysteme leichte Filmtrübungen. Werden nun alternativ Polyisocyanate, die externe oder interne anionische Gruppen enthalten, eingesetzt, so verbessert sich zwar die Fleckenbeständigkeit, aber das erreichbare Beständigkeitsniveau ist immer noch nicht ausreichend. Ferner verschlechtert sich bei solchen Systemen die Verträglichkeit der Komponenten untereinander, und die Filme weisen eine erhöhte Trübung auf.

Es bestand daher die technische Aufgabe, Polyoldispersionen als Komponenten für 2K-PUR-Systeme zur Verfügung zu stellen, die mit Polyisocyanatkomponenten, die anionische Gruppen enthalten, zu fleckenbeständigen und trübungsfreien Beschichtungen verfilmen.

Diese Aufgabe konnte dadurch gelöst werden, dass man wässrige Polyoldispersionen, vorzugsweise vom Typ Primärdispersionen, die in Gegenwart von speziellen nichtionischen Tensiden hergestellt worden sind, mit Polyisocyanaten, die sowohl hydrophoben Charakter als auch nichtionisch oder anionisch hydrophilierten Charakter aufweisen, kombiniert. Diese Tatsache war umso überraschender, weil, wie schon weiter oben erwähnt, Polyololdispersionen ohne solche spezielle nichtionische Tenside in Kombination mit nichtionisch hydrophilierten Polyisocyanaten zu Lacken mit ungenügenden Stabilitäten gegen wässrige färbende Flüssigkeiten führen, und man erwarten musste, dass nach weiterer Zugabe nichtionischer Tenside zu dem 2K-PUR-System noch deutlich schlechtere Beständigkeiten resultieren würden.

Gegenstand der Erfindung sind daher wässrige 2K-PUR-Lacke mit verbesserter Resistenz gegen wässrige Chemikalien, dadurch gekennzeichnet, dass die als Bindemittel eingesetzten wässrigen 2K-PUR-Systeme aus
a) Polyoldispersionen des Vinylpolymerpolyol-Typs,
b) Polyisocyanaten und
c) üblichen Additiven für die Wasserlacktechnologie
bestehen, wobei
die Polyoldispersionen a)

Hydroxylzahlen zwischen 10 und 264 mg KOH/g Festharz, Säurezahlen (berechnet auf die Summe der neutralisierten und nichtneutralisierten Säuregruppen) zwischen 0 bis 55 mg KOH/g Festharz, Molekulargewichte Mₙ von mindestens 5000 g/mol bzw. M_{w} von mindestens 30000 g/mol, Glastemperaturen von mindestens 20°C und mittlere Teilchendurchmesser von höchstens 300 nm aufweisen und in Gegenwart von
a1) 0,1 bis 10,0 Gew.-%, bezogen auf die Summe der Feststoffgehalte von Polymerpolyol und Polyisocyanat, nichtionischen Tensiden des Polyethertyps hergestellt worden sind, wobei die Tensidkomponente a1) ausgewählt ist aus der Gruppe der Blockpoylmere von Ethylenoxid und Propylenoxid des Typs gemäß Formel (I) 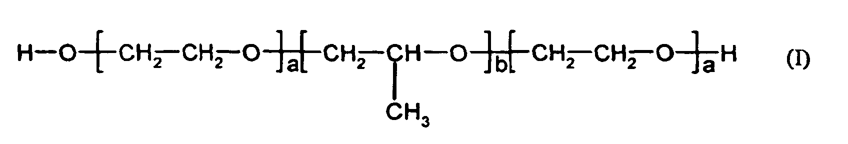 und/oder Block- und statistische Ethylenoxid / Propylenoxid-Copolymere auf Fettalkoholbasis
   und/oder Blockpolymere von Propylenoxid und Ethylenoxid an Ethylendiamin des Typs gemäß Formel (III) 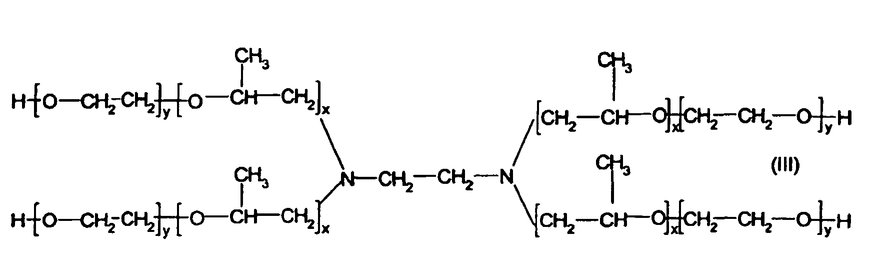 und/oder Addukte von Polyethylenoxid an Fettalkohole,
   und/oder Polyether / Polyester-Blockpolymere,
   die Polyisocyanate b)
   Viskositäten von höchstens 12000 mPa*s und entweder nichthydrophilierten oder nichtionisch bzw. anionisch hydrophilierten Charakter besitzen, und wobei die Komponente b) der Komponente a) in einer solchen Menge zugesetzt wird, die einem Äquivalentverhältnis von Isocyanatgruppen der Komponente b) zu Hydroxylgruppen der Komponente a) von 0,2 : 1 bis 5 : 1 entspricht.
   Gegenstand der Erfindung ist auch ein Verfahren zur Herstellung solcher wässriger 2K-PUR-Systeme.
   Bevorzugt wird die Komponente a) in Gegenwart von
a1) 1,0 bis 8,0 Gewichts-% des nichtionischen Tensids des Polyethertyps hergestellt.
   Als Tensidkomponenten a1) werden bevorzugt Blockpolymere von Ethylenoxid und Propylenoxid gemäß Formel (I) 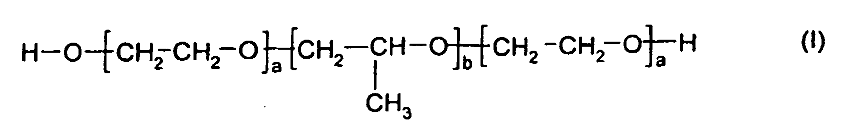 und/oder Block- und statistische Ethylenoxid / Propylenoxid-Copolymere auf Fettalkoholbasis (II),
   und/oder Blockpolymere des Typs gemäß Formel (III), die durch Polykondensation von Propylenoxid und Ethylenoxid an Ethylendiamin erhalten werden können: 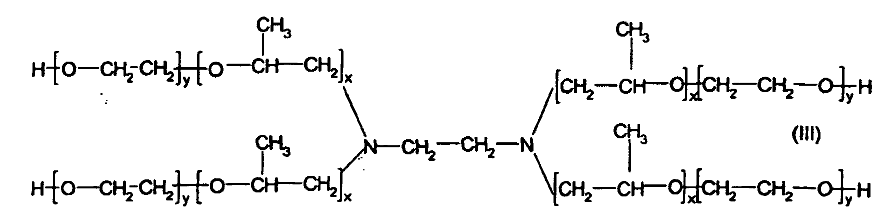 und/oder Addukte von Polyethylenoxid an Fettalkohole (IV)
   und/oder Polyether / Polyester-Blockpolymere (V) hergestellt bzw. eingesetzt.
   Besonders bevorzugt als Tensidkomponenten a1) werden die Tensidklassen (I), (II), (III) und (IV). Diese nichtionischen Tenside weisen im allgemeinen einen Polyethylenoxidgehalt von 5 bis 80 Gew.-%, Molgewichte bis 10000 g/mol und Hydroxylgehalte zwischen 0,3 und 8,0 Gew.-% auf.
   Die Komponente a) wird so hergestellt, dass das nichtionische Tensid a1) bereits vor oder während der Polymerisation zugesetzt wird. Bevorzugt ist der Einsatz von a1) vor der Herstellung von a) in der Polymerisatvorlage.
   Die Polyisocyanatkomponente b) kann hierbei sowohl
b1) nichthydrophilierten Charakter als auch
b2) nichtionisch hydrophilierten Charakter oder auch
b3) anionisch hydrophilierten Charakter aufweisen.

Wird eine nichthydrophilierte, in Wasser unlösliche bzw. nicht dispergierbare Polyisocyanatkomponente b1) in dem wässrigen 2K-PUR-System eingesetzt, ist eine gute Dispergierwirkung nur mittels eines hochwirksamen Dispergieraggregats, z.B. mit einem Düsenstrahldispergator gemäß EP-A 0 685 544, möglich. Erst hiermit werden nach der Applikation des Films höchstmögliche Chemikalienfestigkeiten des 2K-PUR-Systems erzielt.

Soll die Polyisocyanatkomponente b) jedoch mit einfacheren Dispergieraggregaten wie z.B. einem Dissolver oder durch die Verwendung einer 2K-Anlage mit Vorverstäuberdüse oder möglicherweise sogar manuell wirksam und feinteilig mit der Polyolkomponente dispergiert werden, so ist eine nichtionische oder eine anionische Hydrophilierung von b) (als Komponenten b2) bzw. b3)) unbedingt erforderlich.

Die nichtionische Hydrophilierung der Polyisocyanatkomponente b) erfolgt im allgemeinen durch Modifizierung eines unmodifizierten hydrophoben Polyisocyanats mit einem Polyethermonoalkohol z.B. gemäß EP-A 0 540 985 und EP-A 0 959 087.

Die anionische Hydrophilierung der Komponente b) erfolgt vorzugsweise durch Einsatz von 0,2 bis 5,0 Gew.-% (bezogen auf die Summe der Feststoffgehalte von Polymerpolyol und Polyisocyanat) Sulfat-, Sulfonat- oder Phosphatgruppen enthaltenden Tensiden zu der unmodifizierten, hydrophoben Polyisocyanatkomponente b). Die besonders bevorzugten, Phosphatgruppen enthaltenden Tenside weisen hierbei die folgenden Strukturen auf: 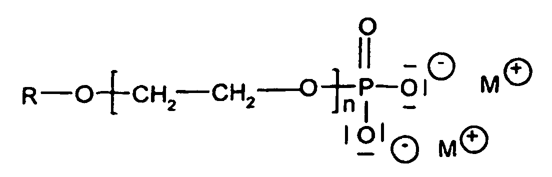 und/oder 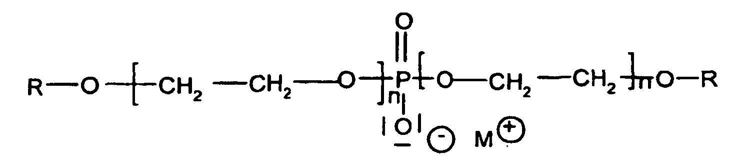 mit R: 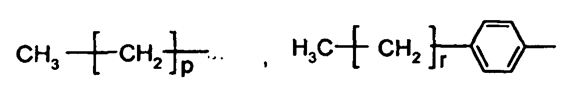 n = 1 - 100 ; p = 5 - 20 ; r = 5 - 15 ; M = Alkali- oder (subst.) Ammoniumion

Der alleinige Einsatz von phosphathaltigen Tensiden der obigen Struktur in wässrigen 2K-PUR-Systemen ist zwar bereits bekannt (vgl. z.B. WO 98/38196 und WO 98/38231), führt aber bei der Mischung der Polyisocyanatkomponente b) mit der Polyolkomponente a), die nicht in Gegenwart der nichtionischen Tensidkomponente a1) hergestellt worden ist, zu unbrauchbaren Ergebnissen: die Polyisocyanate b) sind wesentlich schwieriger in das Polyol a) einarbeitbar, es resultieren instabilere 2K-Dispersionen, und die aufgetrockneten Lackfilme sind deutlich trüber, wie auch in den vorliegenden Beispielen gezeigt wird; auch die Stabilität des beispielsweise auf Holz als Substrat aufgetrockneten 2K-Films gegenüber wässrigen Chemikalien wie z.B. färbenden Substanzen (Rotwein, Kaffee, Tee und Senf) ist deutlich verringert.

Die anionische Hydrophilierung der Komponente b) kann neben Phosphatgruppen auch durch Sulfat- oder Sulfonatgruppen erfolgen. Bevorzugt ist hierbei der Einsatz von Sulfonatgruppen, die im Polyisocyanat in chemisch gebundener Form vorliegen. Diese können z.B. durch die Umsetzung von Polyisocyanaten mit Sulfonatgruppen enthaltenden Verbindungen, die zusätzlich noch mindestens eine gegenüber NCO-Gruppen reaktive Gruppe tragen, hergestellt werden. Beispielhaft hierfür seien Umsetzungsprodukte von Polyisocyanaten mit 3-(Cyclohexylamino)-propansulfonsäure genannt. Die Sulfonsäure- bzw. Sulfonatgruppen können dabei in Mengen von 0,1 - 5,0 Gew.%, bezogen auf das Polyisocyanat, vorhanden sein.

Prinzipiell möglich ist auch der Einsatz von mischhydrophilierten Polyisocyanaten, wie sie z.B. in der EP-A 0 510 438 beschrieben ist. Hierbei erfolgt eine gleichzeitige Hydrophilierung mit nichtionischen Polyethergruppen und (potentiell) anionischen Carboxylgruppen.

Bei den Polymerisaten a) handelt es sich um hydroxyfunktionelle Copolymerisate des Hydroxylzahlbereichs 10 bis 264 mg KOH/g Festharz, des Säurezahlbereichs 0 bis 55 mg KOH/g Festharz, die im übrigen einen Gehalt an chemisch gebundenen Carboxylat- und/oder Sulfonatgruppen von insgesamt 0 bis 97 Miliäquivalenten pro 100 g Feststoff aufweisen. Die Säurezahl bezieht sich hierbei sowohl auf die freien, nicht neutralisierten Säuregruppen, insbesondere Carboxylgruppen, als auch auf die neutralisiert vorliegenden Säuregruppen, insbesondere Carboxylatgruppen. Die Copolymerisate weisen im Allgemeinen ein nach der Methode der Gelpermeations-chromatographie unter Verwendung von Polystyrol als Standard ermittelbares Molekulargewicht Mₙ von 5000 bis 300000 vorzugsweise 10000 bis 200000 bzw. ein Molekulargewicht M_{w} von 30000 bis 2000000, vorzugsweise von 40000 bis 500000 g/mol auf.

Vorzugsweise handelt es sich bei den Copolymerisaten a) um solche aus
A) 0 bis 7, bevorzugt 1 bis 5 Gew.-% Acrylsäure und/oder Methacrylsäure,
B) 0 bis 75 Gew.-% Methylmethacrylat,
C) 0 bis 75 Gew.-% Styrol, wobei die Summe von B + C 10 bis 85 Gew.-% ergibt,
D) 3 bis 40 Gew.-% eines oder mehrerer C₁₋₈-Alkylacrylate bzw. C₂₋₈-Alkyl-methacrylate,
E) 2 bis 74 Gew.-% eines oder mehrerer monohydroxyfunktioneller Alkylacrylate oder Alkylmethacrylate
F) 0 bis 15 Gew.-% anderer olefinisch ungesättigter Monomerer,
wobei die Summe aus A) bis F) 100 Gew.-% ergibt, wobei außerdem 5 bis 100 % der einpolymerisiert vorliegenden Säuregruppen in mit aliphatischen Aminen oder mit Ammoniak neutralisierter Form vorliegen, so dass der Gehalt der Copolymerisate an anionischen, salzartigen Gruppen den oben gemachten Angaben entspricht.

Die einpolymerisiert vorliegenden ungesättigten Säuren A) und gegebenenfalls F) werden, wie ausgeführt, zumindest teilweise neutralisiert, so dass die resultierenden anionischen Gruppen die Löslichkeit oder Dispergierbarkeit der Copolymerisate in Wasser gewährleisten bzw. zumindest erleichtern. Im Falle des Vorliegens von nur geringen Konzentrationen an salzartigen Gruppen kann die Löslichkeit bzw. Dispergierbarkeit der Copolymerisate in Wasser durch Mitverwendung von externen Emulgatoren erleichtert werden. Auf jeden Fall muss die Wasserverdünnbarkeit der Copolymerisate entweder als Dispersion oder kolloid- bis molekulardisperse "Lösung" gewährleistet sein.

Die Monomeren B) und C) können so variiert werden, dass in der Summe B) + C) von 10 bis 85 Gew.-% ausschließlich eines der Monomeren enthalten ist, wobei dann Styrol bevorzugt wird.

Als C₁₋₈-Alkylacrylate D) kommen beispielsweise Methylacrylat, Ethylacrylat, n-Propylacrylat, iso-Propylacrylat, n-Butylacrylat, iso-Butylacrylat, n-Hexylacrylat, n-Octylacrylat, 2-Ethylhexylacrylat in Betracht. Bevorzugt werden n-Butylacrylat, n-Hexylacrylat, 2-Ethylhexylacrylat, insbesondere n-Butyl- und/oder 2-Ethylhexylacrylat.

Als C₂₋₈-Alkylmethacrylate D) kommen beispielsweise Ethylmethacrylat, n-Butyl-methacrylat und / oder 2-Ethylhexylmethacrylat in Betracht.

Als hydroxylfunktionelle (Meth)acrylate E) kommen beispielsweise 2-Hydroxyethyl(meth)acrylat, 2-Hydroxypropyl(meth)acrylat, 2-Hydroxyisopropyl(meth)acrylat, 4-Hydroxybutyl(meth)acrylat oder beliebige Gemische dieser Monomeren in Betracht. Bevorzugt werden 2-Hydroxyethylmethacrylat und das technische Gemisch aus 2-Hydroxypropyl- und 2-Hydroxyisopropylmethacrylat, allgemein als Hydroxypropylmethacrylat bezeichnet.

Die weiteren Monomerbausteine F) können substituierte Styrolabkömmlinge, wie beispielsweise die isomeren Vinyltoluole, α-Methylstyrol, Propenylbenzol, C₅-C₁₂-Cycloalkyl(meth)acrylate, Isobornyl(meth)acrylat, Vinylester wie Vinylacetat, -propionat oder -versatat, Vinylsulfonsäure sein, wobei die Gesamtmenge an polymerisierbaren Säuren (Carbonsäuren A) zuzüglich gegebenenfalls die unter F) genannten Säuren) 7 Gew.-% nicht überschreitet.

Zur zumindest teilweisen Neutralisation der einpolymerisiert vorliegenden Säuregruppen kommen Ammoniak oder aliphatische Amine wie beispielsweise Triethylamin, Dimethylethanolamin, Diethylethanolamin, Triethanolamin oder beliebige andere aliphatische Amine, vorzugsweise des Molekulargewichtsbereichs 31 bis 200, in Betracht.

Die Herstellung der Copolymerisate a) kann beispielsweise nach dem Prinzip der Lösungspolymerisation in organischen Lösungsmitteln erfolgen. Geeignete Lösungsmittel sind beispielsweise Toluol, Xylol, technische Mischungen von Alkylaromaten (Solvesso 100, Solvesso 150 etc.), Chlorbenzol, Ethyl- oder Butylacetat, Methyl- oder Ethylglykolacetat, Methoxypropylacetat, Methoxybutylacetat, Butylglykol, Dioxan, Ethylenglykolmono- oder -diethylether, Dipropylenglykoldimethylether, Aceton, Butanon, Methylenchlorid oder beliebige Gemische derartiger Lösungsmittel.

Bei der Herstellung der Copolymerisate a) in Lösung werden im Allgemeinen solche Lösungsmittel und in solch niedrigen Konzentrationen eingesetzt, dass eine Entfernung derselben nach Beendigung der Polymerisation und Überführung in die wässrige Phase nicht erforderlich ist.

Als Polymerisationsstarter dieser radikalischen Lösungspolymerisation kommen z.B. aliphatische Azoverbindungen wie Azoisobutyronitril (AIBN) oder peroxidische Verbindungen, z.B. Benzoylperoxid, tert.-Butylperoctoat, tert.-Butylperpivalat, tert.-Butylperbenzoat oder Di-tert.-Butylperoxid in Frage.

Als Molekulargewichtsregler kommen vor allem Schwefelverbindungen, wie z.B. Dodecylmercaptan (Dodecanthiol) oder Thioglykol in Betracht.

Nach beendeter Polymerisation erfolgt die Herstellung der Lösungen oder Dispersionen a) vorzugsweise dergestalt, dass die organische Polymerlösung direkt mit Neutralisationsamin versetzt und danach in die wässrige Phase eingeleitet wird oder die organische Polymerlösung in die mit Neutralisationsmittel versehene Wasserphase eindosiert und homogeniert wird. Falls erforderlich, kann das bei der Polymerisation gegenwärtige organische Lösungsmittel anschließend partiell oder vollständig abdestilliert werden.

Besonders vorteilhaft ist indessen die Herstellung der Copolymerisate a) direkt in wässriger Dispersion nach dem Verfahren der Emulsionspolymerisation. Als Radikalstarter kommen hier insbesondere Peroxodisulfate, z.B. Kalium- oder Ammoniumperoxodisulfat, in Betracht. Bei der Herstellung der Copolymerisate a) nach dem Prinzip der Emulsionspolymerisation können auch externe Emulgatoren wie beispielsweise anionische, wie solche auf Alkylsulfat-Basis, Alkylarylsulfonate, Alkylphenolpolyethersulfate wie z.B. in Houben-Weyl, Methoden der organischen Chemie, Erweiterungs- und Folgebände, 4. Auflage, Band E 20, 1987 (Teil 1, Seiten 259 bis 262) angegeben bzw. Alkylpolyethersulfate, oder nichtionische Emulgatoren, wie z.B. die Alkoxylierungs- insbesondere Ethoxylierungsprodukte von Alkanolen, Phenolen oder Fettsäuren mitverwendet werden, die im Anschluss an die Herstellung der Copolymerisate in dem System verbleiben und als Hilfsmittel c) angesehen werden können. Im Falle des Vorliegens derartiger Emulgatoren genügt oftmals eine bereits sehr geringe Neutralisation der vorliegenden Säuregruppen zur Gewährleistung der Homogenität der Lösungen oder Dispersionen a). Die dennoch zumindest in geringer Konzentration eingesetzten Neutralisationsmittel können dem System bereits während der Emulsionspolymerisation einverleibt werden. Diese Dispersionen weisen im allgemeinen Feststoffgehalte von 20 bis 60 Gew.%, pH-Werte von 6 bis 10, Viskositäten von 10 bis 5000 mPas und mittlere Teilchendurchmesser von 50 bis 300 nm (gemessen mit Laserkorrelationsspektroskopie) auf. Die Glastemperaturen (bestimmt mittels DSC) der Festharze liegen über 20°C, bevorzugt über 40°C.

Als Komponente b) geeignete Polyisocyanate sind insbesondere die sogenannten "Lackpolyisocyanate" mit aromatisch oder (cyclo)-aliphatisch gebundenen Isocyanatgruppen, wobei die letztgenannten (cyclo)-aliphatischen Polyisocyanate besonders bevorzugt sind.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion-, Allophanat- und/oder Isocyanuratgruppen aufweisenden Derivate dieser Diisocyanate zu verstehen, die im Anschluss an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den oben genannten Kriterien entsprechende Biuretgruppen aufweisende Polyisocyanate auf Basis von Hexamethylendiisocyanat, wie sie beispielsweise nach den Verfahren erhalten werden können, die in US-A 3 124 605, US-A 3 358 010, US-A 3 903 126, US-A 3 903 127 oder US-A 3 976 622 beschrieben sind und die aus Gemischen von N, N', N"-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-A 4 324 879 erhalten werden können, und die im wesentlichen aus N,N',N"-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von 50 bis 500 mPas und einer zwischen 2,2 und 5,0 liegenden NCO-Funktionalität. Möglich ist aber auch der Einsatz von monomeren Polyisocyanaten wie z.B. 4-Isocyanatomethyl-1,8-octandiisocyanat.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate, wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluss an ihre Herstellung vorzugsweise destillativ von überschüssigen monomeren Diisocyanaten befreit worden sind.

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen.

Die bevorzugte Verwendung von hydrophilierten Polyisocyanaten b), die durch nichtionische bzw. anionische Hydrophilierung der oben genannten hydrophoben Polyisocyanate hergestellt worden sind, ist weiter oben beschrieben.

Die Polyisocyanatkomponente b) kann im übrigen aus beliebigen Gemischen der beispielhaft genannten Polyisocyanate bestehen.

Die Herstellung der erfindungsgemäß zu verwendenden 2K-PUR-Mischungen erfolgt im Allgemeinen durch einfaches Verrühren der Einzelkomponenten a) und b) auf manuelle Weise oder durch Rührereinwirkung bzw. bei schwer zu dispergierenden 2K-Systemen mit einem Düsenstrahldispergator, wobei die Mengenverhältnisse so gewählt werden, dass NCO/OH-Äquivalentverhältnisse von 0,2 : 1 bis 5 : 1, vorzugsweise 0,7 : 1 bis 3 : 1, resultieren.

Hierbei ist es grundsätzlich möglich, die nichtionische Tensidkomponente a1) bereits vor oder während der Polymerisation von a) zuzusetzen. Wird die Komponente a1) der Polyolkomponente a) schon vor der Polymerisation einverleibt, so erfolgt der Zusatz im Falle einer Emulsionspolymerisation bereits in der wässrigen Vorlage im allgemeinen zusammen mit einem anionischen Emulgator.

Wird die Komponente a1) während der Zulaufpolymerisation eingesetzt, dann erfolgt die Zugabe im allgemeinen zum zulaufenden Monomergemisch oder im Falle ausreichender Wasserdispergierbarkeit zu der wässrigen zulaufenden Initiatorlösung. Grundsätzlich möglich ist auch die Zugabe von Tensidkomponente a1) zur Polyolkomponente a) nach beendeter Polymerisation.

Die Verträglichkeit zwischen der Polyisocyanatkomponente b) und der Polyolkomponente a) und damit auch die leichtere Dispergierbarkeit des aus diesen Komponenten hergestellten wässrigen 2K-PUR-Systems wird erheblich gesteigert, wenn die Polyisocyanatkomponente entweder nichtionisch oder anionisch hydrophiliert worden ist. Die Dispergierung kann dann teilweise schon manuell bzw. mit einfachen Rühraggregaten wie z.B. einem Dissolver durchgeführt werden.

Den erfindungsgemäß zu verwendenden Gemischen aus a) und b) bzw. den zu ihrer Herstellung eingesetzten Einzelkomponenten können gegebenenfalls weitere Hilfs- und Zusatzmittel c) der Lacktechnologie einverleibt werden.

Hierzu gehören beispielsweise weitere Mengen an Wasser und/oder an Lösungsmitteln zwecks Einstellung der geeigneten Verarbeitungsviskosität der erfindungsgemäßen Beschichtungsmittel. In den gebrauchsfertigen erfindungsgemäßen Beschichtungsmitteln liegen, bezogen auf das Gesamtgewicht aller Komponenten, im Allgemeinen 2 bis 25 Gew.-% an organischen Lösungsmitteln und 10 bis 75 Gew.-% Wasser vor. Weitere Hilfs- und Zusatzmittel c) sind z.B. Pigmente, Füllstoffe, Verlaufsmittel, Verdicker, Entschäumer, Entlüfter und dergleichen.

Die erfindungsgemäßen Beschichtungsmittel können nach allen technisch üblichen Methoden wie z.B. Spritzen, Tauchen oder Streichen auf beliebige Untergründe wie z.B. Holz, Metall, Kunststoff oder auch mineralische Untergründe als Substrat aufgetragen und bei Raumtemperatur bis ca. 80°C getrocknet werden. Besonders bevorzugt ist die Applikation auf Holz.

### Beispiele

### Polyisocyanat 1

Desmodur® N 100 (Bayer AG, Leverkusen, DE) ist ein nicht hydrophil modifiziertes Polyisocyanat auf Basis von 1,6-Diisocyanatohexan mit einem NCO-Gehalt von ca. 22,0 %, einer mittleren NCO-Funktionalität von ca. 3,8, einer Viskosität von ca. 10000 mPas (23°C) und einem NCO-Äquivalentgewicht von ca. 191 g/mol. Folgende Komponenten wurden diesem Polyisocyanat einverleibt: auf 70 Gew.-Teile des 100 %igen Polyisocyanats 7 Gew.-Teile des Emulgators Rhodafac® RE 610 (Rhone Poulenc Chemicals), 1 Gew.-Teil Triethylamin und 22 Gew.-Teile Methoxybutylacetat.

### Polyisocyanat 2

850 g (4,39 val) eines Isocyanuratgruppen-haltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23°C) werden bei 100°C unter trockenem Stickstoff und Rühren vorgelegt, innerhalb von 30 min mit 150 g (0,30 val) eines auf Methanol gestarteten, monofunktionellen Polyethylenoxidpolyethers eines mittleren Molekulargewichtes von 500, entsprechend einem NCO/OH-Äquivalentverhältnis von 14,6 : 1, versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Durch Zugabe von 0,01 g Zink-(II)-2-ethyl-1-hexanoat wird die Allophanatisierungsreaktion gestartet. Dabei steigt die Temperatur des Reaktionsgemisches aufgrund der freiwerdenden Reaktionswärme bis auf 106°C an. Nach Abklingen der Exothermie, etwa 30 min nach Katalysatorzugabe, wird die Reaktion durch Zugabe von 0,01 g Benzoylchlorid abgebrochen und das Reaktionsgemisch auf Raumtemperatur abgekühlt. Es liegt ein praktisch farbloses klares Polyisocyanatgemisch mit folgenden Kenndaten vor:

| | |
|---|---|
| Festgehalt | 100 % |
| NCO-Gehalt | 16,0 % |
| NCO-Funktionalität | 4,0 |
| Viskosität (23 °C) | 3200 mPas |

Polyisocyanat 2 wird als 70 gew.-%ige Lösung in Methoxybutylacetat eingesetzt.

### Polyisocyanat 3

970 g (5,00 val) eines Isocyanuratgruppen-haltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23°C) werden zusammen mit 30 g (0,14 val) 3-(Cyclohexylamino)-propansulfonsäure, 17,4 g (0,14 mol) Dimethylcyclohexylamin und 254 g 1-Methoxypropyl-2-acetat unter trockenem Stickstoff 5 Stunden bei 80°C gerührt. Nach Abkühlen auf Raumtemperatur liegt eine praktisch farblose klare Lösung eines erfindungsgemäßen Polyisocyanatgemisches mit folgenden Kenndaten vor:

| | |
|---|---|
| Festgehalt | 80 % |
| NCO-Gehalt | 16,0 % |
| NCO-Funktionalität | 3,4 |
| Viskosität (23 °C) | 570 mPas |
| Farbzahl | 15 APHA |
| Sulfonatgruppen-Gehalt | 0,9 % |

In allen Beispiele 1-12 handelt es sich um sogenannte Primärdispersionen, die - abgesehen vom erfindungsgemäßen Einsatz der Tenside a1) - analog den Beispielen 1 und 2 der EP-A 0 557 844 synthetisiert wurden.

### Polymerpolyol 1 (Primärdispersion als Vergleichsbeispiel ohne nichtionisches Tensid)

Diese Vinylpolymerpolyol-Primärdispersion basiert auf folgendem Comonomergemisch:
Acrylsäure (3,0 Gew.-%), Methacrylsäurehydroxypropylester (16,9 Gew.-%), Methacrylsäuremethylester (50,0 Gew.-%) und Acrylsäure-n-butylester (28,1 Gew.-%), polymerisiert in Gegenwart des Emulgators Agitan® 951 (Bayer AG, Leverkusen, DE) (Ammoniumsalz von Dodecyltriethylenoxidmonosulfat; ca. 2,0 Gew.-% bezogen auf Monomergemisch). Folgende physikalisch-chemische Kenndaten werden erhalten:

| | |
|---|---|
| Feststoffgehalt: | 42,0 Gew.-% |
| pH-Wert: | 7,5 |
| Viskosität (23°C; D = 42s⁻¹): | 400 mPas |
| mittlerer Teilchendurchmesser (LKS) | 93 nm |
| Säurezahl: | 12,4 mgKOH/g Dispersion |
| Glastemperatur Tg: | 55° C |

### Polymerpolyol 2 (Vergleichsbeispiel analog Beispiel 1 mit nachgelegtem nichtionischem Tensid)

Die Herstellung des Polymerpolyols erfolgte wie im Beispiel des Polymerpolyols 1; es wurde nach beendeter Polymerisation jedoch noch ein nichtionisches Polyethylenoxid/Propylenoxid-Blockpolymeres mit einem Molekulargewicht von 2090 g/mol und einem Ethylenoxidgehalt von 10 % (Synperonic® PE/L 61 (ICI Surfactants); ca. 2 Gew.-% bezüglich der Dispersion) der fertiggestellten Dispersion zugesetzt. Diese Dispersion weist ähnliche physikalisch-chemische Kenndaten wie Polymerpolyol 1 auf.

### Polymerpolyol 3

Vinylpolymerpolyol-Dispersion auf Basis folgender Comonomerer:
Acrylsäure (3,0 Gew.-%), Methacrylsäurehydroxypropylester (16,9 Gew.-%), Styrol (68,4 Gew.-%) und Acrylsäure-n-butylester (9,7 Gew.-%) polymerisiert in Gegenwart desselben Emulgators (ca. 2,0 Gew.-% bezüglich Monomergemisch) wie bei Polymerpolyol 1 und bei Zugabe desselben Polyethylenoxid / Polypropylenoxid-Blockpolymeren wie in Beispiel 2 (Synperonic® PE / L 61 (ICI Surfactants); ca. 2 % bezüglich der Dispersion) in die Polymerisatvorlage. Die Dispersion weist folgende physikalisch-chemische Kenndaten auf:

| | |
|---|---|
| Feststoffgehalt | 43,9 Gew.-% |
| pH-Wert | 7,0 |
| Viskosität (23°C; D = 42s⁻¹) | ca. 80 mPas |
| mittlerer Teilchendurchmesser (LKS) | 91 nm |
| Säurezahl | 12,8 mgKOH/g Dispersion |

### Polymerpolyol 4 (Primärdispersion)

Vinylpolymerpolyol-Dispersion auf Basis derselben Comonomeren wie bei Polymerpolyol 3; Herstellung ebenfalls in Gegenwart desselben Emulgators wie bei Polymerpolyol 1. Während der Zulaufpolymerisation wird das zulaufende Monomergemisch mit dem Blockpolymeren Synperonic® PE / L 61 (ICI Surfactants; ca. 2 % bezüglich der Dispersion) versetzt.

Folgende physikalisch-chemische Kenndaten werden erhalten:

| | |
|---|---|
| Feststoffgehalt: | 43,6 Gew.-% |
| pH-Wert: | 7,2 |
| Viskosität (23°C; D = 42s⁻¹): | 90mPas |
| Säurezahl: | 13,9 mgKOH/g Dispersion |
| mittlerer Teilchendurchmesser (LKS) | 102nm |

### Polymerpolyol 5 (Primärdispersion als Vergleichsbeispiel für ein Polyol mit Nachsatz eines nichtionischen Tensids)

Vinylpolymerpolyol-Dispersion auf Basis derselben Comonomeren wie bei Polymerpolyol 3; Herstellung ebenfalls in Gegenwart des Emulgators 951 (Ammoniumsalz von Dodecyltriethylenoxidmonosulfat; ca. 2,0 Gew.-% bezogen auf Monomergemisch); die Dispersion wird nach beendeter Polymerisation während der Neutralisation mit Ammoniak mit dem Polyethylenoxid/Polypropylenoxid-Blockpolymeren Synperonic® PE/L 61 (ca. 2 % bezüglich Dispersion) versetzt.

Folgende physikalisch-chemische Kenndaten werden erhalten:

| | |
|---|---|
| Feststoffgehalt: | 43,2 Gew.-% |
| pH-Wert: | 7,5 |
| Viskosität (23°C; D = 42s⁻¹): | ca. 70 mPas |
| Säurezahl: | 13,4 mgKOH/g Dispersion |
| mittlerer Teilchendurchmesser (LKS) | 75 nm |
| Molekulargewicht Mn [g/mol]: | 23300 |
| Molekulargewicht Mw [g/mol]: | 581000 |
| Glastemperatur (DSC): | 81°C |

### Polymerpolyol 6

Vinylpolymerpolyol-Dispersion auf Basis derselben Comonomeren wie bei Polymerpolyol 3; Herstellung ebenfalls in Gegenwart desselben Emulgators wie bei Polymerpolyol 1. In die Vorlage wird zusätzlich ein Polyethylenoxid/Polypropylenoxid-Blockpolymeres mit einem Molekulargewicht von 2200 g/mol und einem Ethylenoxidgehalt von 40 % (Synperonic® PE/L 44 (ICI Surfactants); ca. 2 % bezüglich der Dispersion) eingesetzt. Die wässrige Dispersion weist folgende physikalisch-chemische Kenndaten auf:

| | |
|---|---|
| Feststoffgehalt | 43,4 Gew.-% |
| pH-Wert | 7,2 |
| Viskosität (23°C; D = 42 s⁻¹) | < 100 mPa*s |
| Säurezahl | 13,3 mg KOH/g Dispersion |
| mittlerer Teilchendurchmesser (LKS) | 110 nm |

### Polymerpolyol 7

Vinylpolymerpolyol-Dispersion gemäß EP-A 0 358 979 auf Basis derselben Comonomeren wie bei Polymerpolyol 3; Herstellung ebenfalls in Gegenwart desselben Emulgators wie bei Polymerpolyol 1. In die Vorlage wird zusätzlich ein Polyethylenoxid/Polypropylenoxid-Blockpolymeres mit einem Molekulargewicht von 2900 g/mol und einem Ethylenoxidgehalt von 40 % (Synperonic® PE/L 64, ICI Surfactants; ca. 2 % bezüglich der Dispersion) eingesetzt. Die wässrige Dispersion weist folgende physikalisch-chemische Kenndaten auf:

| | |
|---|---|
| Feststoffgehalt | 43,4 Gew.-% |
| pH-Wert | 7,1 |
| Viskosität (23°C; D = 42 s⁻¹) | < 100 mPa*s |
| Säurezahl | 12,9 mg KOH/g Dispersion |
| mittlerer Teilchendurchmesser (LKS) | 125 nm |

### Polymerpolyol 8

Vinylpolymerpolyol-Dispersion auf Basis derselben Comonomeren wie bei Polymerpolyol 3; Herstellung ebenfalls in Gegenwart desselben Emulgators wie bei Polymerpolyol 1. In die Vorlage wird zusätzlich ein Polyethylenoxid/Polypropylenoxid-Blockpolymeres mit einem Molekulargewicht von 3800 g/mol und einem Ethylenoxidgehalt von 10 % (Synperonic® PE/L 101 (ICI Surfactants); ca. 2 % bezüglich der Dispersion) eingesetzt.

Die wässrige Dispersion weist folgende physikalisch-chemische Kenndaten auf:

| | |
|---|---|
| Feststoffgehalt | 43,2 Gew.-% |
| pH-Wert | 7,0 |
| Viskosität (23°C; D = 42 s⁻¹ | < 100 mPa*s |
| Säurezahl | 12,8 mg KOH/g Dispersion |
| mittlerer Teilchendurchmesser (LKS) | 93 nm |

### Polymerpolyol 9

Vinylpolymerpolyol-Dispersion auf Basis derselben Comonomeren wie bei Polymerpolyol 3; Herstellung ebenfalls in Gegenwart desselben Emulgators wie bei Polymerpolyol 1. In die Vorlage wird zusätzlich ein Polyethylenoxid/Polypropylenoxid-Blockpolymeres mit einem Molekulargewicht von 4800 g/mol und einem Ethylenoxidgehalt von 80 % (Synperonic® PE / F 38 (ICI Surfactants); ca. 2 % bezüglich der Dispersion) eingesetzt.

Die wässrige Dispersion weist folgende physikalisch-chemische Kenndaten auf:

| | |
|---|---|
| Feststoffgehalt | 43,8 Gew.-% |
| pH-Wert | 6,7 |
| Viskosität (23°C; D = 42s⁻¹) | < 100mPa*s |
| Säurezahl | 13,0 mg KOH/g Dispersion |
| mittlerer Teilchendurchmesser (LKS) | 133nm |

### Polymerpolyol 10

Vinylpolymerpolyol-Dispersion gemäß Beispiel 3, hergestellt in Gegenwart desselben Emulgators. In die Vorlage wird zusätzlich ein Ethylenoxid/Propylenoxid-Blockpolymeres, das auf Ethylendiamin als Starter basiert, und das ein Molgewicht von 3700 g/mol und einen Ethylenoxidgehalt von 10 % aufweist (Synperonic® T/ 701 (ICI Surfactants); ca. 2 % bezüglich der Dispersion), eingesetzt.

Die wässrige Dispersion weist die folgenden physikalisch-chemischen Kenndaten auf:

| | |
|---|---|
| Feststoffgehalt | 43,6 Gew.-% |
| pH-Wert | 7,5 |
| Viskosität (23°C; D = 42s⁻¹) | < 100 mPas |
| Säurezahl | 13,8 mgKOH/g Dispersion |
| mittlerer Teilchendurchmesser (LKS) | 105 nm |

### Polymerpolyol 11

Vinylpolymerpolyol-Dispersion gemäß Beispiel 3, hergestellt in Gegenwart desselben Emulgators. In die Vorlage wird zusätzlich ein auf einem Fettalkohol gestarteter Polyether mit dem ungefähren Molekulargewicht 630 g/mol (Synperonic® LF/RA 30 (ICI Surfactants); ca. 2 % bezüglich der Dispersion) eingesetzt.

Die wässrige Dispersion weist die folgenden physikalisch-chemischen Kenndaten auf:

| | |
|---|---|
| Feststoffgehalt | 44,5 Gew.-% |
| pH-Wert | 8,5 |
| Viskosität (23°C; D = 42s⁻¹) | < 100 mPas |
| Säurezahl | 14,2 mgKOH/g Dispersion |
| mittlerer Teilchendurchmesser (LKS) | 95 nm |

### Polymerpolyol 12

Vinylpolymerpolyol-Dispersion bestehend aus denselben Comonomeren wie in Beispiel 1 in denselben Gew.-Verhältnissen, hergestellt in Gegenwart desselben Emulgators wie bei Polymerpolyol 1. In die Vorlage wird zusätzlich dasselbe nichtionische Tensid wie bei Polymerpolyol 2 eingesetzt (Synperonic® PE/ L61; ca. 2 % bezüglich der Dispersion).

Die wässrige Dispersion weist die folgenden physikalisch-chemischen Kenndaten auf:

| | |
|---|---|
| Feststoffgehalt | 43,6 Gew.-% |
| pH-Wert | 7,5 |
| Viskosität (23°C; D = 42 /s) | 150 mPa*s |
| Säurezahl | 14,5 mg KOH/g Dispersion |
| mittlerer Teilchendurchmesser (LKS) | 121 nm |

### Anwendungstechnische Beispiele

### Beispiele 1-6

In den Beispielen 1 - 6 werden das Polymerbeispiel 12 und die Polymervergleichsbeispiele 1 und 2 hinsichtlich der Einarbeitbarkeit der Polyisocyanate 1 und 2 untersucht.

Alle Zahlenangaben sind Gew.-Teile.

Zunächst wurden von diesen 3 Polymerdispersionen Pigmentpasten hergestellt. Dazu wurden zunächst die Polymerdispersionen mit Disperbyk® 190 und BYK® 024 (beide Byk Chemie, Wesel, DE) versetzt und das Tronox® R-KB-2 (Kerr McGee Pigments GmbH, Krefeld, DE) und Aerosil® 200 (Grace, DE) mittels Dissolver eindispergiert. Es wurde ca. 15 min bei 2000 UPM nachdispergiert.

### A) Pigmentpasten

| | **Pigmentpaste 1** | **Pigmentpaste 2** | **Pigmentpaste 3** |
|---|---|---|---|
| Polymerpolyol 12 | 208,0 | | |
| Polymerpolyol 2 | | 168,0 | |
| Polymerpolyol 1 | | | 168,0 |
| Tronox R-KB-2 ¹⁾ | 200,0 | 200,0 | 200,0 |
| Aerosil 200 ²⁾ | 1,0 | 1,0 | 1,0 |
| Disperbyk 190 ³⁾ | 8,0 | 8,0 | 8,0 |
| BYK 024 ⁴⁾ | 2,0 | 2,0 | 2,0 |

| | | | |
|---|---|---|---|
| 1) Tronox® R-KB-2: Titandioxid-Pigment (Kerr McGee Pigments, Krefeld) | | | |
| 2) Aerosil® 200: Siliciumdioxid als Antiabsetzmittel (Grace) | | | |
| 3) Disperbyk® 190: Netz- und Dispergiermittel (Byk Chemie, Wesel) | | | |
| 4) BYK 024: Entschäumer (BYK Chemie, Wesel) | | | |

Mit diesen Pigmentpasten wurden 6 Lacke entsprechend der folgenden Tabelle formuliert. Diese Lacke wurden mittels eines Kastenrakels in einer Nassfilmstärke von ca. 200 µm auf eine Erichsen - Prüfkarte aufgezogen und 24 h bei 18 - 24°C getrocknet. Anschließend wurde der Glanz (Winkel 60°) bestimmt [Wert 1 : schwarzer Karton / Wert 2 : weißer Karton].

### B) Lackformulierung

| **Beispiel** | **1** | **2** | **3** | **4** | **5** | **6** |
|---|---|---|---|---|---|---|
| Pigmentpaste 1 | 42,0 | | | 42,0 | | |
| Pigmentpaste 2 | | 38,0 | | | 38,0 | |
| Pigmentpaste 3 | | | 38,0 | | | 38,0 |
| Polymerpolyol 12 | 34,0 | | | 34,0 | | |
| Polymerpolyol 2 | | 38,0 | | | 38,0 | |
| Polymerpolyol 1 | | | 38,0 | | | 38,0 |
| BYK 024 | 1,0 | 1,0 | 1,0 | 1,0 | 1,0 | 1,0 |
| Butylglykol / Wasser (1:1) | 16,0 | 16,0 | 16,0 | 16,0 | 16,0 | 16,0 |
| Wasser | 7,0 | 7,0 | 7,0 | 7,0 | 7,0 | 7,0 |
| Polyisocyanat 1 | 10,0 | 10,0 | 10,0 | | | |
| Polyisocyanat 2 | | | | 10,0 | 10,0 | 10,0 |
| Glanz Prüfkarte 60° | 69 / 70 | 62 / 64 | 62 /68 | 49 / 52 | 36 / 38 | 36 / 36 |

Die Beispiele 1 und 4 zeigen, dass durch den erfindungsgemäßen Einbau der nichtionischen Tenside in die Polyoldispersion die Einarbeitung von Polyisocyanaten erheblich verbessert und damit eine deutliche Glanzsteigerung im Vergleich zu den nicht erfindungsgemäßen 2K-Systemen 2, 3, 5 und 6 verursacht wird.

### Beispiele 7 - 10

In dieser Versuchsserie wurde das Polymerbeispiel 3 mit dem Polymervergleich 5 in pigmentierten Lacksystemen hinsichtlich der Chemikalienfestigkeit gemäß DIN 68861 überprüft. Die Herstellung der Lacke erfolgte gemäß den Beispielen 1- 6.

| | **Beispiel 7** | **Beispiel 8** | **Beispiel 9** | **Beispiel 10** |
|---|---|---|---|---|
| Polymerpolyol 3 | 56 | | 56 | |
| Polymerpolyol 5 | | 56 | | 56 |
| Disperbyk 190 | 1,7 | 1,7 | 1,7 | 1,7 |
| Tego Foamex 810 ⁵⁾ | 0,02 | 0,02 | 0,02 | 0,02 |
| Aerosil 200 | 0,1 | 0,1 | 0,1 | 0,1 |
| Tronox R-KB-2 | 14,2 | 14,2 | 14,2 | 14,2 |
| Butylglykol : Wasser 1:1 | 16 | 16 | 16 | 16 |
| Serad FX 1010 5 %ig in Wasser ⁶⁾ | 7 | 7 | 7 | 7 |
| BYK 024 | 1 | 1 | 1 | 1 |
| Wasser | 4 | 4 | 4 | 4 |
| Polyisocyanat 2 | 10 | 10 | | |
| Polyisocyanat 1 | | | 10 | 10 |
| EA / BA 1: 1 10 s | 0 | 0 | 0 | 0 |
| Aceton 10 s | 1 / 1 | 1 / 1 | 0 | 0 |
| Ammoniak 2 min | 0 | 0 | 0 | 0 |
| Soda 2 min | 0 | 0 | 0 | 0 |
| Ethanol 50 % ig 1 h | 0 | 0 | 0 | 0 |
| Wasser 16h | 0 | 0 | 0 | 0 |
| Rotwein 5h | 1 / 1 | 2 /2 | 1 / 0 | 2 / 1 |
| Senf 5h | 1 /0 | 3 / 3 | 1 / 0 | 2 / 2 |
| Kaffee 16h | 1 / 1 | 3 / 3 | 0 | 3 / 3 |

| | | | | |
|---|---|---|---|---|
| 5) Tego Foamex 810: Entschäumer (Tego Chemie, Essen) | | | | |
| 6) Serad FX 1010: Verdicker (Servo Delden BV, Delden, Niederlande) | | | | |

Diese Beispiele zeigen, dass durch den erfindungsgemäßen Einbau der nichtionischen Tenside eine deutliche Verbesserung der Chemikalienfestigkeiten, besonders gegenüber färbenden Flüssigkeiten, erreicht wird (Benotung 0: sehr chemikalienstabil; 5: völlig instabil).

### Beispiele 11 -17

In dieser Versuchsserie werden Klarlacksysteme von den Polymerdispersionen 3 und 6 - 11 hergestellt und hinsichtlich der Glanzausbildung und der Chemikalienfestigkeit gemäß DIN 68861 untersucht.

| **Beispiel** | **11** | **12** | **13** | **14** | **15** | **16** | **17** |
|---|---|---|---|---|---|---|---|
| Polymerpolyol 6 | 62 | | | | | | |
| Polymerpolyol 7 | | 62 | | | | | |
| Polymerpolyol 8 | | | 62 | | | | |
| Polymerpolyol 9 | | | | 62 | | | |
| Polymerpolyol 10 | | | | | 62 | | |
| Polymerpolyol 11 | | | | | | 59 | |
| Polymerpolyol 3 | | | | | | | 62 |
| BYK 024 | 1 | 1 | 1 | 1 | 1 | 1 | 1 |
| Serad FX 1010, 5 %ig in Wasser | 7 | 7 | 7 | 7 | 7 | 7 | 7 |
| Butylglykol | 8 | 8 | 8 | 8 | 8 | 8 | 8 |
| Wasser | 22 | 22 | 21,5 | 22,5 | 22 | 25 | 22,5 |
| Polyisocyanat 2 | 10 | 10 | 10 | 10 | 10 | 10 | 10 |
| Glanz 60 ° Karton s/w | 95 /99 | 90 / 96 | 95 /99 | 97/ 100 | 95 / 97 | 98/ 101 | 95 /100 |
| EA /BA 1:1 10 s | 1 / 0 | 1 / 0 | 1 / 0 | 0 | 1 / 0 | 0 | 1 / 0 |
| Aceton 10 s | 2/0 | 1 / 0 | 2/0 | 1 / 0 | 2/0 | 2/0 | 1 / 0 |
| Ammoniak 2 min | 0 | 0 | 0 | 0 | 0 | 0 | 0 |
| Soda 2 min | 0 | 0 | 0 | 0 | 0 | 0 | 0 |
| Ethanol 50 %ig 1h | 0 | 0 | 0 | 0 | 0 | 1 / 0 | 0 |
| Wasser 16 h | 0 | 0 | 0 | 0 | 0 | 0 | 0 |
| Rotwein 5 h | 0 | 0 | 0 | 0 | 0 | 0 | 0 |
| Senf 5 h | 0 | 0 | 0 | 0 | 1 / 0 | 1 / 0 | 0 |
| Kaffee 16 h | 0 | 0 | 0 | 0 | 0 | 0 | 0 |

Der Härter wurde mittels Dissolver 2 min bei ca. 2000 UPM eindispergiert. Danach wurden Nassfilme in einer Schichtdicke von 150 µm auf eine MDF-Platte, die mit einer Melaminharzfolie beschichtet ist, aufgetragen. Zunächst wurde die Prüffläche 15 min bei ca. 20°C vorgetrocknet, dann 60 min bei 60°C gehärtet und noch 7 Tage bei ca. 20°C gelagert. Die Prüfung der Chemikalienfestigkeiten erfolgte gemäß DIN 68861.

Anmerkung: sind 2 Messwerte aufgeführt, so bedeutet der 1.Wert eine Sofortbeurteilung und der 2.Wert die Beurteilung nach 3 Tagen
Dieser Lack wurde außerdem auf eine Prüfkarte in einer Nassfilmstärke von 200 µm aufgezogen und nach 24 h (Lagerung bei ca. 20°C). wurde der Glanzgrad (bei einem Winkel von 60°) bestimmt.

Diese Versuchsserie zeigt, dass mit den erfindungsgemäßen OH-haltigen Dispersionen hochglänzende Lacksysteme mit hervorragenden Chemikalienfestigkeiten erhalten werden.

### Beispiel 18

Es wurden Lacke gemäß Beispiel 9 hergestellt und mittels einer Airless-Anlage (2-K-Anlage der Fa. Graco) auf folierten MDF-Platten appliziert. Es wurden mit folgenden Düsenkombinationen Applikationsversuche durchgeführt:
Anwendungsbeispiel 1: Spritzdüse (0,32 mm); keine Vorverstäuberdüse
Anwendungsbeispiel 2: Spritzdüse (0,32 mm); Vorverstäuberdüse (0,38 mm)
Anwendungsbeispiel 3: Spritzdüse (0,32 mm); Vorverstäuberdüse (0,28 mm)
Anwendungsbeispiel 4: Spritzdüse (0,32 mm); Vorverstäuberdüse(0,23 mm)

Die Lacke wurden in einer Nassfilmstärke von ca. 200 g / m² aufgetragen , ca. 30 min bei 22°C vorgetrocknet und ca. 1 h bei ca. 60°C nachgehärtet. Von diesen Beschichtungen wurde das Aussehen beurteilt.

Während die Anwendungsbeispiele 1 und 2 zu matten und ungleichmäßigen Beschichtungen führte, zeigte besonders das Anwendungsbeispiel 4 eine hochglänzende und gleichmäßige Beschichtung. Das Anwendungsbeispiel 3 zeigte im Vergleich zum Anwendungsbeispiel 4 eine leichte Verschlechterung. Diese Anwendungsbeispiele zeigen, dass die erfindungsgemäßen Dispersionen auf einer üblichen 2 K-Spritzanlage unter Verwendung von einfachen Vorverstäuberdüsen, die eine kleinere Öffnung als die Spritzdüse besitzen, praxisgerecht applizierbar sind.

### Beispiel 19

Im Beispiel 19 wird zunächst eine Pigmentpaste mit den unten in der Tabelle angegebenen Additiven mittels Dissolver eindispergiert. Es wurde ca. 15 min bei 2000 Upm nachdispergiert.

| Pigmentpaste | |
|---|---|
| Polymerpolyol-Dispersion 3 | 168,0 |
| Tronox R-KB-2 | 200,0 |
| Aerosil 200 | 1,0 |
| Byk 024 | 2,0 |
| Disperbyk 190 | 4,0+4,0 |

Mit dieser Pigmentpaste wurde eine Lackformulierung entsprechend der folgenden Tabelle analog den Beispielen 1-6 durchgeführt.

| Auflackung | |
|---|---|
| Pigmentpaste | 38,0 |
| Polymerpolyol-Dispersion 3 | 38,0 |
| Byk 024 | 1,0 |
| Butylglykol | 8,0 |
| Wasser | 15,0 |
| Polyisocyanat 3 | 10,0 |

Die anwendungstechnischen Ergebnisse sind in der folgenden Tabelle aufgelistet. Es wurden hier sowohl das Trocknungsverhalten, die Härteentwicklung mittels Pendeldämpfung, der Glanz sowie die Chemikalienfestigkeit (letztere gemäß DIN 68861 1B, Trocknung: 15' RT, 60' 60°C, 7 Tage RT) überprüft.

| Prüfung | |
|---|---|
| Trocknung | 66' |
| Pendeldämpfung | |
| sofort | 12" |
| nach 1 Tag | 47" |
| nach 2 Tagen | 59" |
| nach 7 Tagen | 77" |
| Glanz 60° s/w Karton | 86/86 |
| EA/BA 1:1 | 1/0 |
| Aceton | 1/1 |
| Ammoniak | 0 |
| Soda | 0 |
| Ethanol | 1/0 |
| Wasser | 0 |
| Rotwein | 0 |
| Senf | 1/0 |
| Kaffee | 0 |

## Patentansprüche

1. Wässrige 2K-PUR-Lacke, **dadurch gekennzeichnet, dass** ihre Bindemittel aus
a) Polyoldispersionen des Vinylpolymerpolyol-Typs,
b) Polyisocyanaten und
c) üblichen Additiven für die Wasserlacktechnologie
bestehen, wobei
die Polyoldispersionen a)
Hydroxylzahlen zwischen 10 und 264 mg KOH/g Festharz, Säurezahlen zwischen (berechnet auf die Summe der neutralisierten und nichtneutralisierten Säuregruppen) von 0 bis 55 mg KOH/g Festharz, Molekulargewichte Mₙ von mindestens 5000 g/mol bzw. M_{w} von mindestens 30000 g/mol, Glastemperaturen von mindestens 20°C und mittlere Teilchendurchmesser von höchstens 300 nm aufweisen und in Gegenwart von
a1) 0,1 bis 10,0 Gew.-%, bezogen auf die Summe der Feststoffgehalte von Polymerpolyol und Polyisocyanat, nichtionischen Tensiden des Polyethertyps hergestellt worden sind, wobei die Tensidkomponente a1) ausgewählt ist aus der Gruppe
der Blockpolymere von Ethylenoxid und Propylenoxid des Typs gemäß Formel (I) 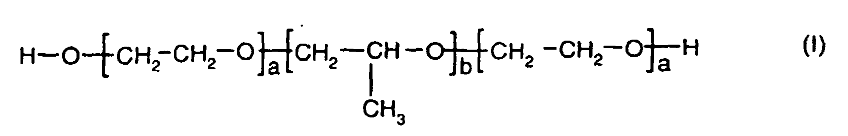 und/oder der Block- und statistische Ethylenoxid/Propylenoxid-Copolymere auf Fettalkoholbasis,
und/oder der Blockpolymere von Propylenoxid und Ethylenoxid an Ethylendiamin des Typs gemäß Formel (III) 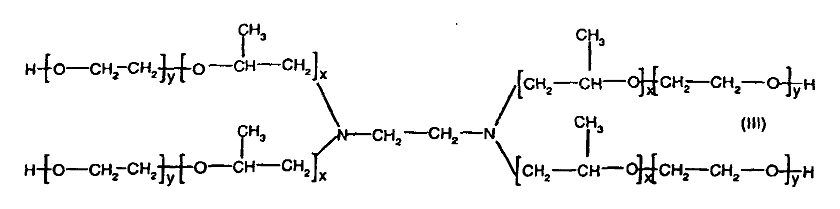 und/oder der Addukte von Polyethylenoxid an Fettalkohole,
und/oder der Polyether/Polyester-Blockcopolymere,
die Polyisocyanate b)
Viskositäten von höchstens 12000 mPa*s und entweder nichthydrophilierten oder nichtionisch bzw. anionisch hydrophilierten Charakter besitzen, und wobei die Komponente b) der Komponente a) in einer solchen Menge zugesetzt wird, die einem Äquivalentverhältnis von Isocyanatgruppen der Komponente b) zu Hydroxylgruppen der Komponente a) von 0,2 : 1 bis 5 : 1 entspricht.

2. Lacke gemäß Anspruch 1, **dadurch gekennzeichnet, dass** die Komponente a) in Gegenwart von 1,0 bis 8,0 Gew.-% des nichtionischen Tensids des Polyethertyps a1) hergestellt wurde.

3. Lacke gemäß Anspruch 1, **dadurch gekennzeichnet, dass** die nichtionischen Tenside einen Ethylenoxidgehalt von 5 bis 80 Gew.-%, Molgewichte bis 10000 g/mol und Hydroxylgehalte von 0,3 Gew.-% bis 8,0 Gew.-% aufweisen.

4. Lacke gemäß Anspruch 1 , **dadurch gekennzeichnet, dass** das nichtionische Tensid a1) während der Herstellung der Polymerpolyol-Dispersion a) zugesetzt wird.

5. Lacke gemäß Anspruch 1, **dadurch gekennzeichnet, dass** das nichtionische Tensid a1) vor der Herstellung des Polymerpolyols in der Polymerisationsvorlage eingesetzt wird.

6. Lacke gemäß Anspruch 1, **dadurch gekennzeichnet, dass** die Polyisocyanate (b) nichthydrophilierte, wässrig nicht selbstdispergierbare Polyisocyanate sind.

7. Lacke gemäß Anspruch 1, **dadurch gekennzeichnet, dass** als Polyisocyanate (b) nichtionische, mit einem Polyethermonoalkohol hydrophilierte Polyisocyanate eingesetzt werden.

8. Lacke gemäß Anspruch 1, **dadurch gekennzeichnet, dass** als Polyisocyanate (b) anionisch hydrophilierte Polyisocyanate eingesetzt werden.

9. Lacke gemäß Anspruch 8, **dadurch gekennzeichnet, dass** man als:Polyisocyanate (b) anionisch hydrophilierte Polyisocyanate einsetzt, die mit 0,2 bis 5,0 Gew.-%, bezogen auf die Summe der Feststoffgehalte von Polymerpolyol und Polyisocyanat, Phosphatgruppen enthaltenden Tensiden mit den folgenden Strukturen hydrophiliert worden sind: 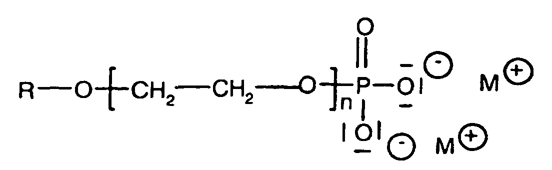 und/oder 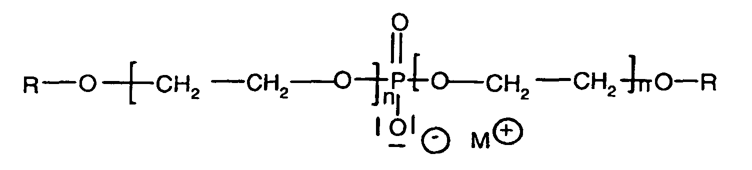 mit R : 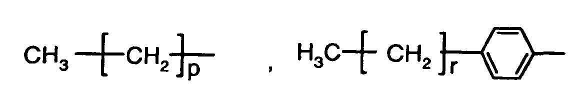 n = 1 - 100 ; p = 5 - 20 ; r = 5 - 15 ; M = Alkali- oder (subst.) Ammoniumion

10. Lacke gemäß Anspruch 8, **dadurch gekennzeichnet, dass** man als Polyisocyanate (b) anionisch hydrophilierte Polyisocyanate einsetzt, die Sulfonatgruppen in chemisch eingebauter Form enthalten.

11. Verwendung von Lacken gemäß Ansprüchen 1 bis 10 zur Lackierung von Holz, Metall, Kunststoff und mineralischen Untergründen.

## Claims

1. Aqueous 2K PU coating materials, **characterized in that** their binders are composed of
a) polyol dispersions of the vinyl polymer polyol type,
b) polyisocyanates, and
c) customary additives for water-based coating technology,
where
the polyol dispersions a)
have hydroxyl numbers of between 10 and 264 mg KOH/g resin solids, acid numbers (calculated based on the sum of the neutralized and nonneutralized acid groups) of from 0 to 55 mg KOH/g resin solids, molecular weights Mₙ of at least 5000 g/mol or M_{w} of at least 30000 g/mol, glass transition temperatures of at least 20°C, and average particle diameters of not more than 300 nm, and have been prepared in the presence of
a1) from 0.1 to 10.0% by weight, based on the sum of the solids contents of polymer polyol and polyisocyanate, of nonionic surfactants of the polyether type, the surfactant component a1) being selected from the group
of block polymers of ethylene oxide and propylene oxide of the type according to formula (I) 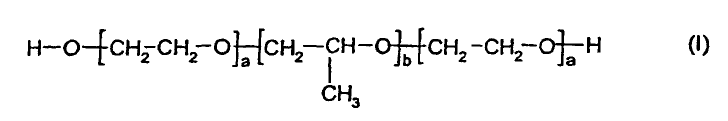 and/or the block and random ethylene oxide/propylene oxide copolymers based on fatty alcohol,
and/or the block polymers of propylene oxide and ethylene oxide with ethylenediamine of the type according to formula (III) 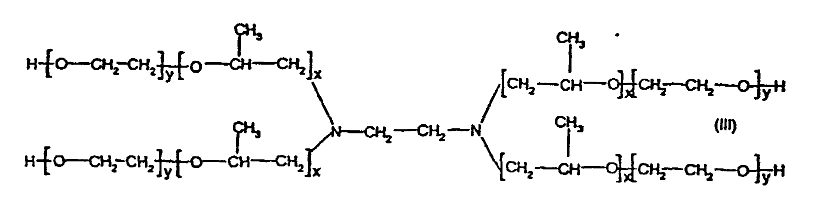 and/or the adducts of polyethylene oxide with fatty alcohols,
and/or the polyether/polyester block copolymers,
the polyisocyanates b)
possess viscosities of not more than 12000 mPa*s and either a nonhydrophilicized or nonionically and/or anionically hydrophilicized character, and where component b) is added to component a) in an amount which corresponds to an equivalents ratio of isocyanate groups of component b) to hydroxyl groups of component a) of from 0.2:1 to 5:1.

2. Coating materials according to claim 1, **characterized in that** component a) has been prepared in the presence of from 1.0 to 8.0% by weight of the nonionic surfactant of the polyether type a1).

3. Coating materials according to claim 1, **characterized in that** the nonionic surfactants have an ethylene oxide content of from 5 to 80% by weight, molar weights of up to 10000 g/mol and hydroxyl contents of from 0.3% by weight to 8.0% by weight.

4. Coating materials according to claim 1, **characterized in that** the nonionic surfactant a1) is added during the preparation of the polymer polyol dispersion a).

5. Coating materials according to claim 1, **characterized in that** the nonionic surfactant a1) is used before the preparation of the polymer polyol, in the initial polymerization charge.

6. Coating materials according to claim 1, **characterized in that** the polyisocyanates (b) are nonhydrophilicized, aqueously non-self-dispersible polyisocyanates.

7. Coating materials according to claim 1, **characterized in that** as polyisocyanates (b) use is made of nonionic polyisocyanates hydrophilicized with a polyether monoalcohol.

8. Coating materials according to claim 1, **characterized in that** as polyisocyanates (b) use is made of anionically hydrophilicized polyisocyanates.

9. Coating materials according to claim 8, **characterized in that** as polyisocyanates (b) use is made of anionically hydrophilicized polyisocyanates which have been hydrophilicized with from 0.2 to 5.0% by weight, based on the sum of the solids contents of polymer polyol and polyisocyanate, of surfactants which contain phosphate groups and have the following structures: 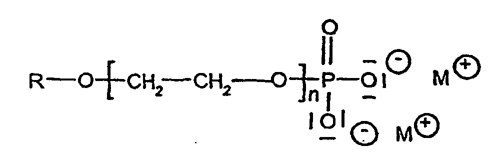 and/or 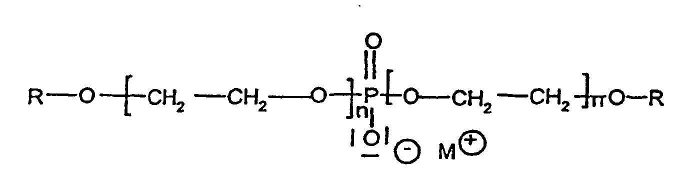 with R: 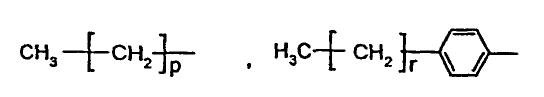 n = 1 - 100; p = 5 - 20; r = 5 - 15; M = alkali metal or (substituted) ammonium ion

10. Coating materials according to claim 8, **characterized in that** as polyisocyanate (b) use is made of anionically hydrophilicized polyisocyanates which contain sulfonate groups in chemically incorporated form.

11. The use of coating materials according to claims 1 to 10 for coating wood, metal, plastic, and mineral substrates.

## Revendications

1. Laques 2K-PUR aqueuses **caractérisées en ce que** leurs liants consistent en
a) dispersions de polyol de type vinylpolymèrepolyol,
b) polyisocyanates et
c) additifs courants pour la technologie des laques aqueuses
où
les dispersions de polyol a)
présentent des indices d'hydroxyle entre 10 et 264 mg de KOH/g de résine solide, des indices d'acide (calculés sur la base de la somme des groupes acides neutralisés et non neutralisés) de 0 à 55 mg de KOH/g de résine solide, des masses moléculaires Mₙ d'au moins 5 000 g/mol ou Mₚ d'au moins 30 000 g/mol, des températures de transition vitreuse d'au moins 20°C et des diamètres de particules moyens d'au plus 300 nm et ont été produites en présence de
a1) 0,1 à 10,0 % en masse, par rapport à la somme des teneurs en solides du polymèrepolyol et du polyisocyanate, de tensioactifs non ioniques de type polyéther, où le composant tensioactif a1) est choisi dans le groupe
des polymères séquencés d'oxyde d'éthylène et d'oxyde de propylène du type selon la formule (I) 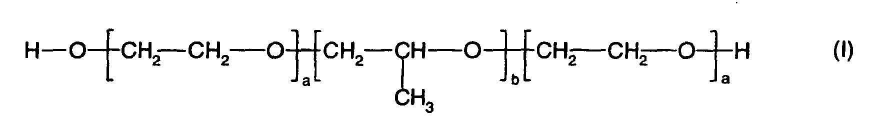
et/ou des copolymères oxyde d'éthylène/oxyde de propylène séquencés et statistiques à base d'alcools gras,
et/ou des polymères séquencés d'oxyde de propylène et d'oxyde d'éthylène sur l'éthylènediamine du type selon la formule (III) 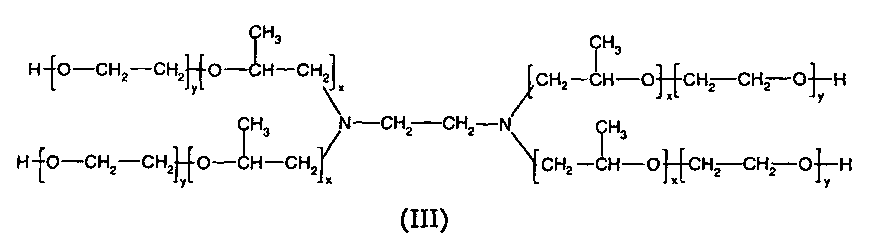 et/ou des produits d'addition de poly(oxyde d'éthylène) sur des alcools gras,
et/ou des copolymères séquencés polyéther/polyester,
les polyisocyanates b)
possèdent des viscosités d'au plus 12 000 mPa*s et un caractère non rendu hydrophile ou rendu hydrophile par hydrophilisation non ionique ou anionique, et où le composant b) est ajouté au composant a) en une quantité qui correspond à un rapport d'équivalents des groupes isocyanate du composant b) aux groupes hydroxyle du composant a) de 0,2:1 à 5:1.

2. Laques selon la revendication 1, **caractérisées en ce que** le composant a) a été produit en présence de 1,0 à 8,0 % en masse de tensioactif non ionique de type polyéther a1).

3. Laques selon la revendication 1, **caractérisées en ce que** les tensioactifs non ioniques comportent une teneur en oxyde d'éthylène de 5 à 80 % en masse, des masses moléculaires jusqu'à 10 000 g/mol et des teneurs en hydroxyle de 0,3 % en masse à 8,0 % en masse.

4. Laques selon la revendication 1, **caractérisées en ce que** le tensioactif non ionique a1) est ajouté pendant la production de la dispersion de polymèrepolyol a).

5. Laques selon la revendication 1, **caractérisées en ce que** le tensioactif non ionique a1) est introduit dans le récipient de polymérisation avant la production du polymèrepolyol.

6. Laques selon la revendication 1, **caractérisées en ce que** les polyisocyanates (b) sont des polyisocyanates non rendus hydrophiles, non autodispersibles en milieu aqueux.

7. Laques selon la revendication 1, **caractérisées en ce que** des polyisocyanates non ioniques, rendus hydrophiles avec un polyéthermonoalcool, sont utilisés comme polyisocyanates (b).

8. Laques selon la revendication 1, **caractérisées en ce que** des polyisocyanates rendus hydrophiles par hydrophilisation anionique sont utilisés comme polyisocyanates (b).

9. Laques selon la revendication 8, **caractérisées en ce que** l'on utilise comme polyisocyanates (b) des polyisocyanates rendus hydrophiles par hydrophilisation anionique qui ont été rendus hydrophiles avec 0,2 à 5,0 % en masse, par rapport à la somme des teneurs en solides du polymèrepolyol et du polyisocyanate, de tensioactifs contenant des groupes phosphate ayant les structures suivantes : 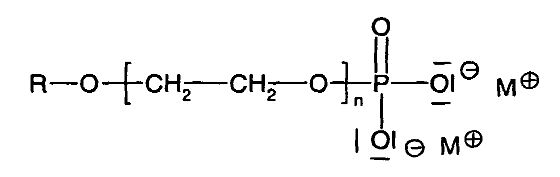 et/ou 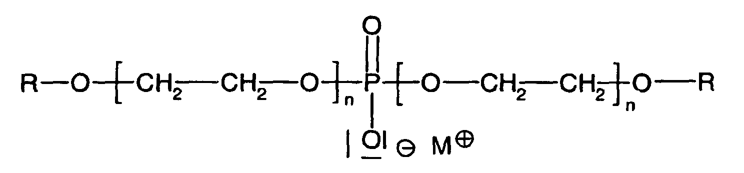 avec R : 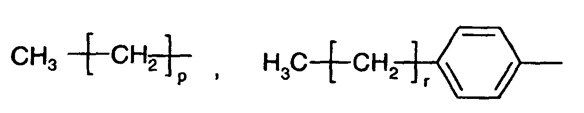 n = 1-100 ; p = 5-20 ; r = 5-15 ; M = ion alcalin ou ammonium (subst.).

10. Laques selon la revendication 8, **caractérisées en ce que** l'on utilise comme polyisocyanates (b) des polyisocyanates rendus hydrophiles par hydrophilisation anionique qui contiennent des groupes sulfonate sous forme incorporée chimiquement.

11. Utilisation de laques selon les revendications 1 à 10 pour le laquage du bois, d'un métal, d'une matière plastique et de substrats minéraux.
